(19) Europäisches Patentamt
European Patent Office
Office européen des brevets

(11) EP 2 661 467 B1

(12) EUROPEAN PATENT SPECIFICATION

(45) Date of publication and mention of the grant of the patent:
**15.03.2017 Bulletin 2017/11**

(21) Application number: **12727954.5**

(22) Date of filing: **06.01.2012**

(51) Int Cl.:
***C08F 8/00*** (2006.01) ***C08L 25/18*** (2006.01)
***C08F 8/36*** (2006.01)

(86) International application number:
**PCT/US2012/020543**

(87) International publication number:
**WO 2012/094632 (12.07.2012 Gazette 2012/28)**

# (54) A CROSS-LINKING METHOD AND ARTICLES PRODUCED THEREBY

VERNETZUNGSVERFAHREN UND IN DIESEM VERFAHREN HERGESTELLTE GEGENSTÄNDE

PROCÉDÉ DE RÉTICULATION ET ARTICLES PRODUITS PAR CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2011 CN 201110002777**

(43) Date of publication of application:
**13.11.2013 Bulletin 2013/46**

(73) Proprietor: **General Electric Company**
**Schenectady, NY 12345 (US)**

(72) Inventors:
- **XIA, Zijun**
  **Niskayuna, NY 12309 (US)**
- **FANG, Jianhua**
  **Shanghai, 200240 (CN)**
- **MACDONALD, Russell, James**
  **Niskayuna, NY 12309 (US)**
- **LU, Su**
  **Niskayuna, NY 12309 (US)**
- **YANG, Hai**
  **Niskayuna, NY 12309 (US)**
- **BARBER, John, H.**
  **Niskayuna, NY 12309 (US)**

(74) Representative: **Foster, Christopher Michael et al**
**General Electric Technology GmbH**
**GE Corporate Intellectual Property**
**Brown Boveri Strasse 7**
**5400 Baden (CH)**

(56) References cited:
**WO-A1-2008/129551**

- **JING XU ET AL: "A New Crosslinked Sulfonated Polystyrene for Proton Exchange Fuel Cell Membrane", HIGH PERFORMANCE POLYMERS, vol. 22, no. 4, 1 June 2010 (2010-06-01), pages 395-411, XP008153677, INSTITUTE OF PHYSICS PUBLISHING, BRISTOL, GB ISSN: 0954-0083, DOI: 10.1177/0954008309105515 [retrieved on 2009-08-22]**
- **THEODOROPOULOS A.G ET AL.: "Sulfone-type crosslinks in sulfonation of macronet polystyrene backbone", POLYMER, vol. 34, no. 18, September 1993 (1993-09), pages 3905-3910, XP002680330,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 661 467 B1

## Description

### BACKGROUND OF THE INVENTION

#### Field of the Invention

Embodiments of the present invention relate to a cross-linking method and articles produced thereby, particularly to a method for cross-linking styrenic polymers and articles produced thereby.

#### Description of the Prior Art

Cation-exchange polymers have wide applications in industry. Ion exchange capacity (IEC) is one of the most important parameters, which have high effects on polymer properties. High IECs impart high ionic conductivity to cation-exchange polymers. However, polymers with high IECs often cause excess swelling or even dissolution in water. From viewpoint of practical use, it is strongly desired to develop cation-exchange polymer with high IEC, low swelling degree and high thermal stability. Cross-linking is a common and effective method to suppress swelling degree and to improve stability.

JING XU ET AL: "A New Crosslinked Sulfonated Polystyrene for Proton Exchange Fuel Cell Membrane",HIGH PERFORMANCE POLYMERS, INSTITUTE OF PHYSICS PUBLISHING, BRISTOL, GB, vol. 22, no. 4, 1 June 2010 (2010-06-01) for example discloses the preparation of a series of cross-linked sulphonated polystyrene membranes, wherein polystyrene is first sulphonated, then transformed into a membrane and then crosslinked in the presence of phosphorous pentoxide/methanesulfonic acid solution.

### BRIEF DESCRIPTION

In one aspect, embodiments disclosed herein relate to a method for cross-linking a styrenic polymer, comprising: providing a partly sulphonated styrenic polymer, and cross-linking the partly sulphonated styrenic polymer in the presence of a polyphosphoric acid.

In one embodiment, the styrenic polymer is selected from a group consisting of a homopolymer of a styrenic monomer, a copolymer of a styrenic monomer with one or more comonomers, and a combination thereof.

In one embodiment, the cross-linking is carried out at a temperature of 100°C or greater, in particular at a temperature in the range from 120°C to 200°C.

In one embodiment, the partly sulphonated styrenic polymer has a degree of sulfonation of 10%-80%, preferably 20%-70%.

In one embodiment, the cross-linking is carried out by forming a composition comprising the partly sulphonated styrenic polymer to obtain a molding, and immersing the molding into the polyphosphoric acid. In another embodiment, the molding is selected from a group consisting of a film, an ion exchange resin and a hollow fiber.

Disclosed herein is an article which comprises at least one component comprising a cross-linked polystyrene produced by the method of the disclosure.

Disclosed herein is a water treatment apparatus, which comprises at least one component comprising a cross-linked polystyrene produced by the method of the disclosure.

Disclosed herein is an ion exchange membrane, which comprises a cross-linked polystyrene produced by the method of the disclosure. The ion exchange membrane can have an Ion Exchange Capacity (IEC) of from 1.9 to 2.5 meq/g.

In another aspect, embodiments disclosed herein relate to a process for treating water, which comprises contacting the water with the ion exchange membrane of the disclosure.

These and other features, aspects, and advantages of the disclosure may be understood more readily by reference to the following detailed description.

### DETAILED DESCRIPTION OF THE INVENTION

In the following specification and the claims, which follow, reference will be made to a number of terms, which shall be defined to have the following meanings.

The singular forms "a", "an", and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited

to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, "Polymer" means a polymeric compound prepared by polymerizing monomers, whether of the same or a different type. The generic term "polymer" embraces the terms "homopolymer," "copolymer," and the like.

As used herein, "Copolymer" means a polymer prepared by the polymerization of at least two different types of monomers. The generic term "copolymer" includes the term "bipolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

In a first aspect, the disclosure relates to a method for cross-linking a styrenic polymer, comprising:

providing a partly sulphonated styrenic polymer, and
cross-linking the partly sulphonated styrenic polymer in the presence of a polyphosphoric acid.

As used herein, the term "styrenic polymer" refers to a polymer comprising a styrenic monomeric unit, which may include a homopolymer, a copolymer, and a combination thereof.

As used herein, the term "styrenic monomer" includes styrene represented by the formula $C_6H_5CH=CH_2$, and its derived compounds such as, for example, styrenic derivatives. In one embodiment, the styrenic monomer can be of the following formula:

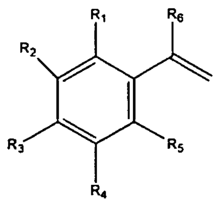

wherein each of $R_1$ to $R_6$ is independently selected from the group consisting of a hydrogen, a $C_1$-$C_{20}$ alkyl or alkoxy, and a halogen, with the proviso that at least one of $R_1$ to $R_5$ is a hydrogen. In one embodiment, the $C_1$-$C_{20}$ alkyl or alkoxy includes, but is not limited to methyl, ethyl, n-propyl, i-propyl, n-butyl, i-butyl, t-butyl, n-hexyl, methoxy, ethoxy, i-propoxy, t-butyloxy, and hexyloxy. In one embodiment, examples of the halogen include, for example, fluoro, chloro, and bromo. In a preferred embodiment, each of $R_1$ to $R_6$ is a hydrogen, i.e. the styrenic monomer is styrene.

In one embodiment, the styrenic polymer is selected from a group consisting of a homopolymer of a styrenic monomer, a copolymer of a styrenic monomer with one or more comonomers, and a combination thereof.

Suitable comonomers that may be used in embodiments disclosed herein include various compounds, as known in the art, polymerizable with the styrenic monomer. The comonomers include, but are not limited to $\alpha$-olefins such as ethylene, propylene and butylene; dienes including conjugated dienes such as 1,3-butadiene and isoprene, and non-conjugated dienes such as 1,2-butadiene and 1,4-pentadiene; other comonomers such as acrylonitrile, and the like.

In one embodiment, the styrenic polymer is selected from a group consisting of a homopolymer of styrene, a copolymer of a styrene with one or more comonomers, and a combination thereof. In a preferred embodiment, the styrenic polymer is a homopolymer of styrene, i.e. polystyrene. When the styrenic polymer is polystyrene, cross-linked polystyrene is obtained by the method of the disclosure.

In one embodiment, styrenic polymer useful for the disclosure can have a number average molecular weight of at least 5,000 atomic mass units, specifically at least 8,000 atomic mass units. In another embodiment, styrenic polymer useful for the disclosure can have a number average molecular weight up to 5,000,000 atomic mass units, specifically up to 2,000,000 atomic mass units. In one embodiment, styrenic polymer useful for the disclosure can have a number average molecular weight of 10,000 to 1,000,000 atomic mass units, specifically 20,000 to 800,000 atomic mass units.

In one embodiment, styrenic polymer useful for the disclosure is selected from polystyrene, which has a number average molecular weight of 10,000 to 2,000,000 atomic mass units, specifically 20,000 to 800,000 atomic mass units.

Styrenic polymer can be prepared in a continuous or batchwise manner by any method known to those skilled in the art, including solution polymerization, emulsion polymerization, and suspension polymerization.

For example, styrenic polymer can be prepared by a solution polymerization method as follows: the styrenic monomer, a solvent, an initiator, and optionally one or more comonomer(s) are introduced into a reactor, and heated to allow the polymerization reaction. In the solution polymerization, a single reactor, or multiple reactors with at least 2, at

least 3 reactors, and so on can be used. Solvent can be used to control the viscosity and control the molecular weight as a chain transfer agent, whose amount depends on the structure of the reactor(s) and the desired molecular weight of the product. The temperature of the reactor(s) can be selected as desired, for example, about 90-200°C.

Styrenic polymer useful for the disclosure can be commercially available.

In the preparation of sulphonated styrenic polymer, a phenyl ring in the repeat units of styrenic monomer is typically substituted by one sulfonic acid group, and rarely substituted by multiple sulfonic acid groups. As used herein, the term "partly sulphonated styrenic polymer" refers to a sulphonated styrenic polymer with a sulfonation degree of less than 100%, in other words, in the partly sulphonated styrenic polymer, some phenyl rings in the repeat units of styrenic monomer are substituted by sulfonic acid groups, whereas others are un-substituted by any sulfonic acid group. Sulfonation degree is defined as the percentage of sulphonated phenyl rings (i.e. phenyl ring attached to a sulfonic acid group) in the structure of a sulphonated styrenic polymer based on the total number of phenyl rings.

Sulfonation degree can be calculated as follows:

$$\text{Sulfonation Degree} = n_{\text{-SO3H}}/n_{\text{phenyl ring}} * 100\%$$

wherein $n_{\text{-SO3H}}$ and $n_{\text{phenyl}}$ ring represent the moles of sulfonic acid groups and the moles of benzene rings, respectively.

If each benzene ring is substituted by one sulfonic acid group, the sulfonation degree will be equal to 100%. Sulfonation degree can be determined according to any known method in the art, such as titration and $^1$H-NMR.

Partly sulphonated styrenic polymer used in the disclosure can be obtained by sulfonation of a styrenic polymer with a sulphonating reagent.

In the sulfonation process, a solvent may be usually used. The solvent can include various solvents known to the person skilled in the art, for example, halogenated hydrocarbons such as chlorinated alkanes, and cycloalkanes such as cyclohexane. In addition, concentrated sulfuric acid can be used as a solvent, and in this case, it also serves as the sulfonating reagent itself.

In one embodiment, sulfonating reagents useful for the disclosure can include, but are not limited to, concentrated sulfuric acid, oleum, $SO_3$, acyl sulfate. In another embodiment, sulfonating reagents can be selected from acyl sulfates. Examples of acyl sulfates include, but are not limited to, acetyl sulfate, propionyl sulfate and butyryl sulfate.

In one embodiment, the sulfonation of styrenic polymer can be carried out as follows: styrenic polymer is dissolved in an appropriate solvent such as 1,2 - dichloroethane, followed by adding acyl sulfate such as acetyl sulfate, propionyl sulfate and butyryl sulfate, in particular, acetyl sulfate, to allow the reaction; the reaction can be quenched by alcohol (for example ethanol). After removing the solvent, washing and drying, partly sulphonated styrenic polymer is obtained. The sulfonation degree of the partly sulphonated styrenic polymer so obtained is in a linear relationship with the amount of sulfonating reagent within a certain range, resulting in an easy control of the sulfonation degree.

In one embodiment, acyl sulfate can be prepared as follows: fatty acid with a high molecular weight is dissolved in cyclohexane, then treated with $SO_3$ in a certain ratio (for example, the molar ratio of acid to $SO_3$ = 1.6:1). Although $SO_3$ is not soluble in cyclohexane, it can quickly dissolve and form a homogeneous solution in the presence of carboxylic acid at room temperature. For example, $C_{12}$ and $C_{18}$ fatty acids are mixed with $SO_3$, resulting in lauroyl sulfate and stearoyl sulfate, respectively. The reaction of fatty acid and $SO_3$ can be expressed as:

$$RCOOH+SO_3 \rightarrow RCOOSO_3H \qquad (1)$$

In another embodiment, acyl sulfate can be prepared by the reaction of acyl chloride and sulfuric acid. The reaction of acyl chloride and sulfuric acid can be expressed as:

$$RCOCl+H_2SO_4 \rightarrow RCOOSO_3H + HCl \qquad (2)$$

In another embodiment, acyl sulfate can be prepared by the reaction of anhydride and concentrated sulfuric acid. The reaction of anhydride and sulfuric acid can be expressed as:

$$(RCO)_2O+H_2SO_4 \rightarrow RCOOSO_3H + RCOOH \qquad (3)$$

In the above three equations, R can be selected from $C_{1-20}$ alkyls, including, for example, methyl, ethyl, propyl, n-undecyl, and n-heptadecyl.

By selecting appropriate conditions and sulfonating reagents, partly sulphonated styrenic polymers with various sulfonation degrees can be obtained. In one embodiment, the partly sulphonated styrenic polymer useful for the disclosure has a degree of sulfonation of 10%-80%. In another embodiment, the partly sulphonated styrenic polymer useful for the

disclosure has a degree of sulfonation of 20% -70%. If the degree of sulfonation is too low, IEC of the resulting final product will be relatively small, which may limit the applicability of the final product. If the degree of sulfonation is too large, the partly sulphonated styrenic polymer may have a great solubility in water, negatively affecting the stability of the final product.

In a method of the disclosure, polyphosphoric acid is used as a catalyst for the crosslinking of partly sulphonated styrenic polymer.

As used herein, the term "polyphosphoric acid" refers to compounds with the following formula,

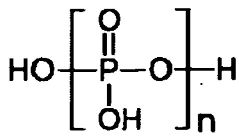

wherein n represents the number of phosphoric acid units in the molecule, which is an integer greater than or equal to 2. Polyphosphoric acid can be obtained by condensation of two or more ortho-phosphoric acid molecules through dehydration. For example, dehydration of two ortho-phosphoric acid molecules results in polyphosphoric acid with n equal to 2 (i.e. pyrophosphoric acid). For example, dehydration of three ortho-phosphoric acid molecules results in polyphosphoric acid with n equal to 3 (i.e. triphosphoric acid). Similarly, dehydration of four ortho-phosphoric acid molecules results in polyphosphoric acid with n equal to 4 (i.e. tetraphosphoric acid).

Pyrophosphoric acid, tripolyphosphoric acid and tetrapolyphosphoric acid have the following formula, respectively:

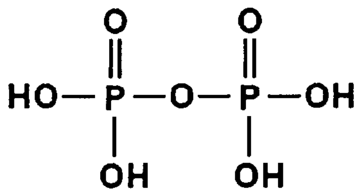

pyrophosphoric acid

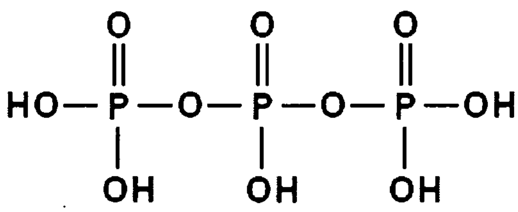

tripolyphosphoric acid

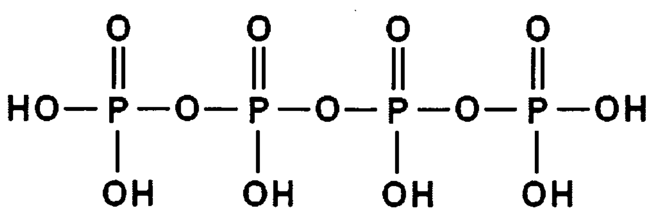

tetrapolyphosphoric acid

Polyphosphoric acid is typically formed by dehydration of phosphoric acid, for example, through heating and evaporation to remove water. Thus the obtained polyphosphoric acid is usually a mixture of polyphosphoric acids with different values of n. Polyphosphoric acid is also commercially available.

Polyphosphoric acid can be characterized by the phosphorus amount in the form of phosphorus pentoxide ($P_2O_5$). In one embodiment, the polyphosphoric acid used in the disclosure has a phosphorus amount by phosphorus

pentoxide ($P_2O_5$) of at least about 30wt%, based on the total weight of the polyphosphoric acid. In a preferred embodiment, the polyphosphoric acid used in the disclosure has a phosphorus amount by phosphorus pentoxide ($P_2O_5$) of 60wt% to 90%, particularly 75wt% to 85%, based on the total weight of the polyphosphoric acid.

Under the conditions used in a method of the disclosure, the polyphosphoric acid is present in a liquid form. Therefore, in one embodiment, a method of the disclosure can be carried out by immersing the partly sulphonated styrenic polymer into the polyphosphoric acid.

In one embodiment, the method of the disclosure can be carried out by forming the partly sulphonated styrenic polymer (or a composition comprising the partly sulphonated styrenic polymer) to obtain a molding, and immersing the molding into the polyphosphoric acid. The forming can be performed by any processes known to those skilled in the art, including, but not limited to, injection molding, compression molding, blow molding, casting, or extruding. Those skilled in the art can select the form of the molding if desired, including, but not limited to, a film, an ion exchange resin and a hollow fiber, or the like.

In one embodiment, the cross-linking of the partly sulphonated styrenic polymer can be carried out at a temperature of 100°C or greater, preferably at least 120°C, more preferably at least 140°C. Generally, the cross-linking temperature should not be too high. In another embodiment, the cross-linking can be carried out at a temperature of at most 250°C, preferably at most 220°C, more preferably at most 200°C. In a preferable embodiment, the cross-linking can be carried out at a temperature of from 120°C to 200°C(preferably from 140°C to 190°C).

Those skilled in the art can select the cross-linking time depending on the factors, such as the cross-linking conditions (such as the temperature), the dimension of the molding, and the properties of the end products. For example, when the cross-linking temperature is low, a longer time can be selected. In one embodiment, the cross-linking time can be in a range of from 5 minutes to 5 hours. In another embodiment, the cross-linking time can be less than or equal to 2 hours, less than or equal to 1.5 hours, or less than or equal to 1.2 hours.

The inventors of the disclosure have found that the partly sulphonated styrenic polymer may be dissolved well in a lot of solvents such as ethanol or dimethyl sulfoxide (DMSO), prior to being treated with the method of the disclosure. After the treatment, the polymer becomes completely insoluble in these solvents, which implies that the partly sulphonated styrenic polymer is cross-linked. The inventors presume that the sulfonic group in the partly sulphonated styrenic polymer reacts with the active hydrogen atom on the non-sulfonated benzene rings in the polymer to form a highly stable sulfonyl bond due to the effect of the polyphosphoric acid, whereby the cross-linking is formed by connecting the different styrenic polymer chains with the stable sulfonyl bond.

The second aspect of the disclosure relates to a method of treating an article comprising, providing an article comprising a composition containing a partly sulphonated styrenic polymer, and treating the article in the presence of a polyphosphoric acid.

In one embodiment, the article is selected from a group consisting of an ion exchange membrane, an ion exchange resin and a hollow fiber used in water treatment.

In one embodiment, the treating is carried out by immersing the article into the polyphosphoric acid. In one embodiment, the treating is carried out at a temperature of about 100°C or greater. In a preferable embodiment, the treating is carried out at a temperature in the range from 120°C to 200°C, preferably from 140°C to 190°C. The treatment time can be selected according to the treatment conditions (such as temperature), the types, dimensions and/or the desired properties of the article.

The embodiments described above in the first aspect of the disclosure can be also suitable for the second aspect.

The third aspect of the disclosure relates to a method for producing an article, comprising: providing a composition comprising a partly sulphonated styrenic polymer, forming the composition to obtain a molding, and treating the molding in the presence of a polyphosphoric acid to obtain the article.

In one embodiment, the article is selected from a group consisting of an ion exchange membrane, an ion exchange resin and a hollow fiber used in water treatment.

The forming can be performed by any processes known to those skilled in the art, including, but not limited to, injection molding, compression molding, blow molding, casting, or extruding. Those skilled in the art can select the form of the molding if desired, including, but not limited to, a film, an ion exchange resin and a hollow fiber.

In one embodiment, the treating is carried out by immersing the molding into the polyphosphoric acid. In one embodiment, the treating is carried out at a temperature of 100°C or greater. In a preferable embodiment, the treating is carried out at a temperature in the range from 120°C to 200°C, preferably from 140°C to 190°C. The treatment time can be selected according to the treatment conditions (such as temperature), the types, dimensions and/or the desired properties of the article.

The embodiments described above in the first aspect of the disclosure can be also suitable for the third aspect.

The fourth aspect of the disclosure particularly relates to a method for manufacturing a cation exchange membrane used in water treatment, comprising providing a composition comprising a partly sulphonated polystyrene, forming the composition into a film, and treating the film by immersing the film into a polyphosphoric acid to obtain the cation exchange membrane.

In one embodiment, the partly sulphonated polystyrene has a degree of sulfonation of 10%-80%, preferably 20-70%.

In a embodiment, the treating is carried out at a temperature in the range from 120°C to 200°C, preferably from 140°C to 190°C.

In one embodiment, the forming is carried out by casting the composition. The thickness of the film prepared by casting can be selected according to the requirements.

The resultant cation exchange membrane, having good properties per se, such as a high ion exchange capacity, a low water uptake and a low swelling ratio, can be used directly without a substrate. In one embodiment, the resultant cation exchange membrane has an IEC of from 1.9 to 2.5 meq/g.

In one embodiment, the membrane can be provided on a substrate such as a non-woven fabric, so as to improve the properties of the membrane. The membrane can be pressed on the substrate.

The fifth aspect of the disclosure relates to an article, comprising at least one component comprising the cross-linked polystyrene prepared according to the method described in the first aspect of the disclosure.

The article can be any form known in the art, such as a membrane or an ion exchange resin. In one embodiment, as noted above, the sulphonated polystyrene can be formed to obtain a film, which is subsequently immersed into the polyphosphoric acid to be treated according to the method described in the first aspect of the disclosure. Thereby, an ion exchange membrane can be obtained.

In another embodiment, the sulphonated polystyrene can be granulated to obtain a particulate, which is subsequently immersed into the polyphosphoric acid to be treated according to the method described in the first aspect of the disclosure. Thereby, an ion exchange resin can be obtained.

The sixth aspect of the disclosure relates to a water treatment apparatus, comprising at least one component comprising a cross-linked polystyrene produced by the method described in the first aspect of the disclosure.

The seventh aspect of the disclosure relates to an ion exchange membrane, comprising a cross-linked polystyrene produced by the method described in the first aspect of the disclosure. The membrane can also be prepared according to the method of the fourth aspect. The membrane has an Ion Exchange Capacity (IEC) of from 1.9 to 2.5 meq/g.

The eighth aspect of the disclosure relates a method for treating water, said method comprising contacting the water with the ion exchange membrane of the seventh aspect. The method for treating water can be performed according to the conventional procedure in the art. For example, water can be treated by passing through the ion exchange membrane under a pressure. Those skilled in the art can select the parameters for treating water according to the properties of the membrane, such as the pressure, the temperature or the flow rate.

In the prior arts, the cross-linked polystyrene is generally prepared by adding a cross-linker, divinylbenzene, during the synthesis of the polystyrene. The resultant cross-linked polystyrene is hard to be processed since it has been cross-linked. Furthermore, the prior art processes involve complex synthesis procedures, and an additional cross-linking group is introduced into the polymer structure. It is also difficult to control the cross-linking procedure.

In the method of the disclosure, the styrenic polymer is cross-linked after it is synthesized. Furthermore, the partly sulphonated styrenic polymer may be formed to obtain a molding, which is then cross-linked directly. Thus, comparing with the prior art processes, the method has advantages such as simple operation, and it is easy to control the cross-linking procedure according to the requirements. The partly sulphonated styrenic polymer before being cross-linked, having a good processability, can be easily formed to obtain a variety of moldings if desired. A variety of cross-linked articles can be obtained by utilizing the method.

It has been proved that, the polyphosphoric acid and a phosphorus pentoxide solution, two kinds of different catalysts in the term of catalyzing the cross-linking of a sulphonated polymer, may be not exchanged simply. In addition, the structure of the sulphonated polymer may also greatly affect the type of the suitable catalyst.

For example, the sulphonated poly(sulphide sulphone) having the following formula can be cross-linked only with the polyphosphoric acid as a catalyst,

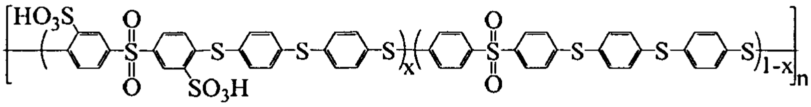

(x = 0.4, **SPSSF-40**)
(x = 0.5, **SPSSF-50**)
(x = 0.6, **SPSSF-60**)

(I).

The sulphonated poly(sulphide sulphone) was cross-linked well by using the polyphosphoric acid as the catalyst at 180 °C for a very short period of time (e.g. 0.5-5 h). After the solubility was test, the resultant product was completely insoluble in DMSO. However, if a phosphorus pentoxide/methanesulfonic acid solution (phosphorus pentoxide/ methanesulfonic acid=1/10, wt/wt)) was used as the catalyst, the sulphonated poly(sulphide sulphone) can not be cross-linked well even at the optimal use temperature of the phosphorus pentoxide/methanesulfonic acid solution, 80°C, for a very long period of time (>48h). After the solubility was test, the resultant product was still partially (mostly) soluble in DMSO.

The method of cross-linking the sulphonated styrenic polymer (especially the sulphonated polystyrene) with the polyphosphoric acid as the catalyst is non-obvious, and the effects thereof are unexpected.

The method where the polyphosphoric acid is used as the catalyst for cross-linking the partly sulphonated styrenic polymer, can be easily operated, and it is hardly to pollute the environment, since the polyphosphoric acid is a non-volatile acid. The hydrolysate of the polyphosphoric acid during the cross-linking of the partly sulphonated styrenic polymer is phosphoric acid, which is not a strong acid, has a relatively low causticity, and will not adversely affect the properties of the final cross-linked products.

Contrarily, when the phosphorus pentoxide solution is used as the catalyst for cross-linking the sulphonated polymer, a solvent such as methanesulfonic acid must be used. The solvent such as methanesulfonic acid is very volatile, resulting in easily polluting the environment. Methanesulfonic acid also is a strong caustic solvent, which will greatly erode the device used in the method. Furthermore, methanesulfonic acid is a strong acid, which will degrade the sulphonated polymer during the cross-linking of the polymer, resulting in the deterioration of the properties of the cross-linked products.

In addition, the polyphosphoric acid may be reused many times. Under the similar cross-linking conditions, the polyphosphoric acid may be reused for about 5 times higher than the phosphorus pentoxide solution.

The disclosure comprises the following embodiments:

Embodiment 1. A method for cross-linking a styrenic polymer, comprising:

providing a partly sulphonated styrenic polymer, and
cross-linking the partly sulphonated styrenic polymer in the presence of a polyphosphoric acid.

Embodiment 2. The method of Embodiment 1, wherein the styrenic polymer is selected from a group consisting of a homopolymer of a styrenic monomer, a copolymer of a styrenic monomer with one or more comonomers, and a combination thereof.

Embodiment 3. The method of any one of Embodiments 1 to 2, wherein the cross-linking is carried out at a temperature of 100°C or greater.

Embodiment 4. The method of any one of Embodiments 1 to 3, wherein the cross-linking is carried out at a temperature in the range from 120°C to 200 °C.

Embodiment 5. The method of any one of Embodiments 1 to 4, wherein the partly sulphonated styrenic polymer has a degree of sulphonation of 10%-80%.

Embodiment 6. The method of any one of Embodiments 1 to 5, wherein the partly sulphonated styrenic polymer has a degree of sulphonation of 20%-70%.

Embodiment 7. The method of any one of Embodiments 1 to 6, wherein the cross-linking is carried out by forming a composition comprising the partly sulphonated styrenic polymer to obtain a molding, and immersing the molding into the polyphosphoric acid.

Embodiment 8. The method of Embodiment 7, wherein the molding is selected from a group consisting of a film, an ion exchange resin and a hollow fiber.

Embodiment 9. The method of any one of Embodiments 1 to 8, wherein the providing the partly sulphonated styrenic polymer comprises the steps of :

providing a styrenic polymer;
contacting acetic anhydride with concentrated sulfuric acid to form acetyl sulfate; and
reacting the acetyl sulfate with the styrenic polymer to obtain the partly sulphonated styrenic polymer.

Embodiment 10. An article comprising at least one component comprising a cross-linked polystyrene produced by the method of any one of Embodiments 1 to 9.

Embodiment 11. A water treatment apparatus, comprising at least one component comprising a cross-linked polystyrene produced by the method of any one of Embodiments 1 to 9.

Embodiment 12. An ion exchange membrane, comprising a cross-linked polystyrene produced by the method of any one of Embodiments 1 to 9.

Embodiment 13. The ion exchange membrane of Embodiment 12, wherein the membrane has an Ion Exchange Capacity (IEC) of from 1.9 to 2.5 meq/g.

Embodiment 14. A method for treating water, said method comprising contacting the water with the ion exchange membrane of Embodiment 12 or 13.

Embodiment 15. A method for treating an article, comprising:

- providing an article comprising a composition comprising a partly sulphonated styrenic polymer;
- treating the article in the presence of a polyphosphoric acid.

Embodiment 16. The method of Embodiment 15, wherein the article is selected from a group consisting of an ion exchange membrane, an ion exchange resin and a hollow fiber for water treatment.
Embodiment 17. The method of any one of Embodiments 15-16, wherein the treatment is carried out by immersing the article into the polyphosphoric acid.
Embodiment 18. The method of any one of Embodiments 15-17, wherein the treatment is carried out at a temperature of 100°C or greater.
Embodiment 19. The method of any one of Embodiments 15-18, wherein the treatment is carried out at a temperature in the range from 120°C to 200 °C.
Embodiment 20. The method of any one of Embodiments 15-19, wherein the partly sulphonated styrenic polymer has a degree of sulphonation of 20%-80%.
Embodiment 21. The method of any one of Embodiments 15-20, wherein the styrenic polymer is selected from a group consisting of a homopolymer of a styrenic monomer, a copolymer of a styrenic monomer with one or more comonomers, and a combination thereof.
Embodiment 22. The method of any one of Embodiments 15-21, wherein the styrenic polymer is selected from a group consisting of a homopolymer of a styrenic, a copolymer of a styrenic with one or more comonomers, and a combination thereof.
Embodiment 23. The method of any one of Embodiments 15-22, wherein the providing the partly sulphonated styrenic polymer comprises the steps of :

- providing a styrenic polymer;
- contacting acetic anhydride with concentrated sulfuric acid to form acetyl sulfate; and
- reacting the acetyl sulfate with the styrenic polymer to obtain the partly sulphonated styrenic polymer.

Embodiment 24. A method for manufacturing an article, comprising:

- providing a composition comprising a partly sulphonated styrenic polymer;
- forming the composition to obtain a molding; and
- treating the molding in the presence of a polyphosphoric acid to yield the article.

Embodiment 25. A method of Embodiment 24, wherein the article is selected from a group consisting of an ion exchange membrane, an ion exchange resin and a hollow fiber for water treatment.
Embodiment 26. A method of any one of Embodiments 24-25, wherein the treatment is carried out by immersing the molding into a polyphosphoric acid.
Embodiment 27. A method of any one of Embodiments 24-26, wherein the treatment is carried out at a temperature of 100°C or greater.
Embodiment 28. A method of any one of Embodiments 24-27, wherein the treatment is carried out at a temperature in the range from 120°C to 200 °C.
Embodiment 29. A method of any one of Embodiments 24-28, wherein the partly sulphonated styrenic polymer has a degree of sulphonation of 20%-80%.
Embodiment 30. A method of any one of Embodiments 24-29, wherein the forming of the composition is carried out by injection, compression, blow, casting or extrusion molding.
Embodiment 31. A method for manufacturing a cation exchange membrane, comprising:

- providing a composition comprising a partly sulphonated polystyrene;
- forming the composition into a membrane; and
- treating the membrane by immersing it into a polyphosphoric acid to yield the cation exchange membrane.

Embodiment 32. The method of Embodiment 31, wherein the partly sulphonated styrenic polymer has a degree of sulphonation of 20%-80%.
Embodiment 33. The method of Embodiment 31 or 32, wherein the treatment is carried out at a temperature in the range from 120°C to 200 °C.
Embodiment 34. The method of any one of Embodiments 31-33, wherein the forming of the composition is carried out by casting molding.

Embodiment 35. The method of an one of Embodiments 31-34, wherein the providing the partly sulphonated polystyrene comprises the steps of :

providing a polystyrene;
contacting acetic anhydride with concentrated sulfuric acid to form acetyl sulfate; and
reacting the acetyl sulfate with the polystyrene to obtain the partly sulphonated styrene.

## Examples

The invention is illustrated in more details by virtue of examples below. However, it is to be understood that these examples are merely exemplary, and shall not be construed as limiting. Unless otherwise indicated, all materials used are commercially available.

Measurement Process

1. Measurement of the degree of sulphonation

The degree of sulphonation was measured as followed: weighing a sample of dry sulphonated polystyrene film with a mass of $W_{SPS}$(*e.g.* 1g); immersing it into 200ml saturated sodium chloride solution; stirring at room temperature for 3 days; taking out the membrane, washing thoroughly with deionized water; combining the aqueous solution; titrating with a NaOH solution whose molar concentration is known ($C_{NaOH}$, in mol/L) to equivalent point (phenolphthalein turns red and the color does not fade within a minute); recording the volume of NaOH consumed ($V_{NaOH}$, in L). The degree of sulphonation were calculated from the following equation:

$$\text{degree of sulphonation} = 104 \cdot C_{NaOH} \cdot V_{NaOH} / (W_{SPS} - 80 \cdot C_{NaOH} \cdot V_{NaOH}).$$

2. Measurement of Ion Exchange Capacity (IEC)

IEC was measured by a titration method.

For membranes of Example 1 and Comparative Example 1, dry membranes (0.2-0.8 g) were cut into small pieces and immersed into saturated sodium chloride solution with stirring for 1 day. The resulting solution was titrated with 0.01 N sodium hydroxide solution using phenolphthalein as the indicator. IEC was reported in meq/g. Since the membranes of Example 1 and Comparative Example 1 did not have substrate, IEC thereof could be directly calculated.

For the GE CR61CMP membrane of Comparative Example 2, it was first immersed in 1M HCl solution for 24 hours to form a $-SO_3H$ type membrane. The $H^+$ type membrane was immersed into saturated sodium chloride solution with stirring for 1 day. The resulting solution was titrated with 0.01 N sodium hydroxide solution using phenolphthalein as the indicator. IEC was reported in meq/g. Since the GE CR61CMP membrane had non-woven fabrics as substrate, weight thereof was taken out in the calculation.

3. Water uptake (WU)

Water uptake was measured as followed: three sheets of films (20-80 mg per sheet) of each film were immersed into water at a given temperature for 5 hours; subsequently the films were taken out, wiped with tissue paper, and quickly weighed on a microbalance. WU of the films was calculated from the following equation:

$$WU(\%) = \frac{W_s - W_d}{W_d} \times 100$$

where $W_d$ and $W_s$ are the weight of dry and corresponding water swollen film sheets respectively. Water uptake of each film was estimated from the average value of WU of each sheet.

4. Swelling ratio

Dimensional changes were measured by immersing the membranes into deionized water at a given temperature for 7 h. The area change was calculated from the following equations:

$$\Delta A = \frac{A - A_0}{A_0}$$

Where $A_0$ and A are the area of membrane before and after soaking treatment, respectively.

Preparative Example 1: Synthesis of sulphonated polystyrene (SPS)

1.7mL concentrated sulfuric acid, 3.1mL acetic anhydrate and 6.0mL 1,2-dichloroethane (DCE) were added into a 5mL dry beaker pre-chilled in an ice bath under nitrogen flow. The mixture was stirred magnetically for 2 hours. Acetyl sulfate was formed in DCE. The solution mixture was transferred to a dropping funnel to be used as a sulphonating agent in the next step.

5.2g polystyrene (Mn = 140,000, available from Aldrich) and 150mL DCE were added into a 250mL dry beaker under nitrogen flow. The mixture was stirred magnetically throughout the reaction. After the polystyrene fully dissolved, the mixture was heated to 50°C, and the acetyl sulfate/DCE solution prepared above was added dropwise. The reaction was continued at that temperature for 24 hour. Precipitates appeared and were isolated, washed with DCE, then washed with n-hexane, and dried under vacuum to yield the solfonated polystyrene (SPS). Degree of sulphonation thereof was determined to be 51%.

Preparative Example 2 Forming the membrane

SPS of Preparative Example 1 was dissolved in ethanol to give a concentration of about 8% (g/100ml). The SPS solution was cast to a Teflon plate, and dried at 50°C for 8 hours. Subsequently, it was cooled to room temperature. The membrane was stripped from the Teflon plate and dried under vacuum at 100°C for 10 hour to yield the SPS membrane.

IEC of the SPS membrane of Preparative Example 2 was determined as described above to be 3.55 meq/g; swelling ratio was determined to be 195% at 50°C; water uptake was not measured due to lack of mechanical strength.

Comparative Example 1: Cross-linking SPS membrane using $P_2O_5$ solution as catalyst

The dry membrane produced in Preparative Example 2 was completely immersed into Eaton's reagent $(P_2)O_5$/methanesulfonic acid solution, wherein $P_2O_5$/methanesulfonic acid = 1/10(wt/wt)) at 80°C (due to the volatility of methanesulfonic acid, 80°C is the optimal temperature for Eaton's reagent) for 30 minutes. Subsequently, the membrane was taken out, washed thoroughly with de-ionized water to remove the residual acid, and dried under vacuum at 100-120°C for 24 hours to give the cross-linked SPS membrane of Comparative Example 1. IEC of the cross-linked SPS membrane of Comparative Example 1 was determined to be 2.14 meq/g.

Comparative Example 2: CR61CMP membrane

CR61CMP membrane was a cation exchange membrane available from GE Inc, which was formed by a polystyrene cross-linked with divinylbenzene, with non-woven fabrics as substrate.

IEC of CR61CMP membrane of Comparative Example 2 was determined to be 1.9 meq/g; swelling ratio thereof was 6.9$\pm$1.0% at 50°C; and water uptake was 50.2$\pm$0.3% at 50°C.

Example 1 Cross-linking SPS membrane using polyphosphoric acid as catalyst

The dry membrane produced in Preparative Example 2 was completely immersed into polyphosphoric acid (the phosphorus amount in the form of $P_2O_5$ is 80wt% based on the weight of the polyphosphoric acid, available from SinoPharm, China) for 30 minutes. Subsequently the membrane was taken out washed thoroughly with de-ionized water to remove the residual acid, and dried under vacuum at 100-120°C for 24 hours to give the cross-linked SPS membrane (CSPS) of Example 1.

As mentioned above, sulphonated polystyrenes (SPS) have good solubility in ethanol. However, the cross-linked SPS membrane produced in Example 1 was completely insoluble in ethanol, which proved that the treatment in the polyphosphoric acid cross-linked the sulphonated polystyrene.

IEC of the cross-linked SPS membrane of Example 1 was determined to be 2.45 meq/g; swelling ratio thereof was 21% at 50°C; and water uptake was 48% at 50°C.

It had been found by comparison between the cross-linked SPS membrane of Example 1 and the SPS membrane of Preparative Example 2 that the former possessed significantly reduced swelling ratio and water uptake, as well as

significantly increased stability, which further proved that the treatment of the disclosure cross-linked sulphonated polystyrene. Moreover, it took only 30 minutes at 170°C to yield a cross-linked SPS membrane with a satisfying stability using polyphosphoric acid as catalyst, and the resulting cross-linked SPS membrane had very good ion exchange property with an IEC up to 2.45 meq/g.

For an ion exchange membrane, ion exchange capacity is one of the most important properties. Generally, it is desirable that the ion exchange capacity is as high as possible insofar as it does not affect stability, while the swelling ratio and water uptake is relatively low.

The inventors also surprisingly found that the ion exchange capacity of the cross-linked SPS membrane of Example 1 was significantly higher than the cross-linked SPS membrane of Comparative Example 1 (about 15% higher). This indicates that compared to the cross-linked membrane resulting from the cross-linking with $P_2O_5$ as catalyst, the method using a phosphoric acid as catalyst is able to provide a cross-linked SPS membrane with significantly better performance.

Even the comparison between the cross-linked SPS membrane of Example 1 and the CR61CMP membrane of Comparative Example 2 could demonstrate that the ion exchange capacity of the cross-linked SPS membrane of Example 1 was significantly higher than the CR61CMP membrane, while water uptake thereof was also slightly lower than that of the CR61CMP membrane. The CR61CMP membrane had a lower swelling ratio because it had non-woven fabrics as substrate, which essentially did not swell in the water to limit the swelling of the membrane so as to give a lower swelling ratio. If a substrate were also provided for the cross-linked SPS membrane of Example 1, a similarly good swelling ratio would be obtained. The results indicate that the stability of the cross-linked SPS membrane of Example 1 is already comparable to a successful commercial cation exchange membrane. Moreover the cross-linked SPS membrane also has a significantly higher ion exchange capacity, thus better performance.

The foregoing examples are merely illustrative, serving to illustrate only some of the features of the disclosure. The appended claims are intended to claim as broadly as it has been conceived and the examples herein presented are illustrative of selected embodiments from a manifold of all possible embodiments. Accordingly, it is applicants' intention that the appended claims are not to be limited by the choice of examples utilized to illustrate features of the disclosure. As used in the claims, the word "comprises" and its grammatical variants logically also subtend and include phrases of varying and differing extent such as for example, but not limited thereto, "consisting essentially of" and "consisting of." Where necessary, ranges have been supplied, those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

## Claims

**1.** A method for cross-linking a styrenic polymer, comprising:

providing a partly sulphonated styrenic polymer, and
cross-linking the partly sulphonated styrenic polymer in the presence of a polyphosphoric acid.

**2.** The method of claim 1, wherein the styrenic polymer is selected from a group consisting of a homopolymer of a styrenic monomer, a copolymer of a styrenic monomer with one or more comonomers, and a combination thereof.

**3.** The method of claim 1, wherein the cross-linking is carried out at a temperature of 100°C or greater.

**4.** The method of claim 1, wherein the cross-linking is carried out at a temperature in the range from 120°C to 200 °C.

**5.** The method of claim 1, wherein the partly sulphonated styrenic polymer has a degree of sulfonation of 10%-80%, measured as indicated in the measurement process section.

**6.** The method of claim 1, wherein the partly sulphonated styrenic polymer has a degree of sulfonation of 20%-70%, measured as indicated in the measurement process section.

**7.** The method of claim 1, wherein the cross-linking is carried out by forming a composition comprising the partly sulphonated styrenic polymer to obtain a molding, and immersing the molding into the polyphosphoric acid.

8. The method of claim 1, wherein the molding is selected from a group consisting of a film, an ion exchange resin and a hollow fiber.

9. The method of claim 1, wherein the providing the partly sulphonated styrenic polymer comprises the steps of:

providing a styrenic polymer;
contacting acetic anhydride with concentrated sulfuric acid to form acetyl sulfate; and
reacting the acetyl sulfate with the styrenic polymer to obtain the partly sulphonated styrenic polymer.

10. A method for treating water, the method comprising contacting the water with an ion exchange membrane comprising a cross-linked polystyrene produced by a method for cross-linking a styrenic polymer comprising:

providing a partly sulphonated styrenic polymer, and
cross-linking the partly sulphonated styrenic polymer in the presence of a polyphosphoric acid.

11. The method of claim 10, wherein the ion exchange membrane has an Ion Exchange Capacity (IEC) of from 1.9 to 2.5 meq/g when measured by a titration method.

## Patentansprüche

1. Verfahren zum Vernetzen eines Styrolpolymers, das Folgendes umfasst:

Bereitstellen eines teilsulfonierten Styrolpolymers und
Vernetzen des teilsulfonierten Styrolpolymers in Gegenwart einer Polyphosphorsäure.

2. Verfahren nach Anspruch 1, bei dem das Styrolpolymer aus einer Gruppe bestehend aus einem Homopolymer eines Styrolmonomers, einem Copolymer eines Styrolmonomers mit einem oder mehreren Comonomeren und einer Kombination davon ausgewählt ist.

3. Verfahren nach Anspruch 1, bei dem die Vernetzung bei einer Temperatur von 100°C oder mehr durchgeführt wird.

4. Verfahren nach Anspruch 1, bei dem die Vernetzung bei einer Temperatur im Bereich von 120°C bis 200°C durchgeführt wird.

5. Verfahren nach Anspruch 1, bei dem das teilsulfonierte Styrolpolymer einen gemäß den Angaben im Messmethodenteil gemessenen Sulfonierungsgrad von 10%-80% aufweist.

6. Verfahren nach Anspruch 1, bei dem das teilsulfonierte Styrolpolymer einen gemäß den Angaben im Messmethodenteil gemessenen Sulfonierungsgrad von 20%-70% aufweist.

7. Verfahren nach Anspruch 1, bei dem die Vernetzung durch Formen einer zusammensetzung, die das teilsulfonierte Styrolpolymer umfasst, zu einem Formkörper und Eintauchen des Formkörpers in die Polyphosphorsäure durchgeführt wird.

8. Verfahren nach Anspruch 1, bei dem der Formkörper aus einer Gruppe bestehend aus einer Folie, einem Ionenaustauscherharz und einer Hohlfaser ausgewählt ist.

9. Verfahren nach Anspruch 1, bei dem das Bereitstellen des teilsulfonierten Styrolpolymers folgende Schritte umfasst:

Bereitstellen eines Styrolpolymers;
Inberührungbringen von Essigsäureanhydrid mit konzentrierter Schwefelsäure zur Bildung von Acetylsulfat und
Umsetzen des Acetylsulfats mit dem Styrolpolymer zum Erhalt des teilsulfonierten Styrolpolymers.

10. Verfahren zur Behandlung von Wasser, bei dem man das Wasser mit einer Ionenaustauschermembran, die ein durch ein Verfahren zum Vernetzen eines Styrolpolymers, das Folgendes umfasst:

Bereitstellen eines teilsulfonierten Styrolpolymers und

Vernetzen des teilsulfonierten Styrolpolymers in Gegenwart einer Polyphosphorsäure,
hergestelltes vernetztes Polystyrol umfasst, in Kontakt bringt.

11. Verfahren nach Anspruch 10, an dem die Ionenaustauschermembran bei Messung durch ein Titrationsverfahren eine Ionenaustauschkapazität (IEC) von 1,9 bis 2,5 meq/g aufweist.

**Revendications**

1. Procédé de réticulation d'un polymère styrénique, comprenant :

   la fourniture d'un polymère styrénique partiellement sulfoné, et
   la réticulation du polymère styrénique partiellement sulfoné en présence d'un acide polyphosphorique.

2. Procédé de la revendication 1, dans lequel le polymère styrénique est choisi dans un groupe constitué d'un homopolymère d'un monomère styrénique, un copolymère d'un monomère styrénique avec un ou plusieurs comonomères, et une combinaison de ceux-ci.

3. Procédé de la revendication 1, dans lequel la réticulation est conduite à une température de 100 °C ou plus.

4. Procédé de la revendication 1, dans lequel la réticulation est conduite à une température dans la plage de 120 °C à 200 °C.

5. Procédé de la revendication 1, dans lequel le polymère styrénique partiellement sulfoné a un degré de sulfonation de 10 % à 80 %, mesuré comme indiqué dans la section de procédé de mesure.

6. Procédé de la revendication 1, dans lequel le polymère styrénique partiellement sulfoné a un degré de sulfonation de 20 % à 70 %, mesuré comme indiqué dans la section de procédé de mesure.

7. Procédé de la revendication 1, dans lequel la réticulation est conduite par formation d'une composition comprenant le polymère styrénique partiellement sulfoné pour obtenir un moulage, et immersion du moulage dans l'acide polyphosphorique.

8. Procédé de la revendication 1, dans lequel le moulage est choisi dans un groupe constitué d'un film, une résine d'échange d'ions et une fibre creuse.

9. Procédé de la revendication 1, dans lequel la fourniture du polymère styrénique partiellement sulfoné comprend les étapes de :

   fourniture d'un polymère styrénique ;
   mise en contact d'anhydride acétique avec de l'acide sulfurique concentré pour former du sulfate d'acétyle ; et
   réaction du sulfate d'acétyle avec le polymère styrénique pour obtenir le polymère styrénique partiellement sulfoné.

10. Procédé de traitement de l'eau, le procédé comprenant la mise en contact de l'eau avec une membrane d'échange d'ions comprenant un polystyrène réticulé produit par un procédé pour réticuler un polymère styrénique comprenant :

    la fourniture d'un polymère styrénique partiellement sulfoné, et
    la réticulation du polymère styrénique partiellement sulfoné en présence d'un acide polyphosphorique.

11. Procédé de la revendication 10, dans lequel la membrane d'échange d'ions a une capacité d'échange d'ions (IEC) de 1,9 à 2,5 meq/g lorsqu'elle est mesurée par un procédé de titrage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- A New Crosslinked Sulfonated Polystyrene for Proton Exchange Fuel Cell Membrane. **JING XU et al.** HIGH PERFORMANCE POLYMERS. INSTITUTE OF PHYSICS PUBLISHING, 01 June 2010, vol. 22